# EUROPÄISCHE PATENTSCHRIFT

(11) **EP 2 703 231 B1**
(45) Veröffentlichungstag und Bekanntmachung des Hinweises auf die Patenterteilung: **29.03.2017**
(21) Anmeldenummer: 13177622.1
(22) Anmeldetag: 23.07.2013
(51) Int. Cl.: B60R 21/0136, B60R 21/34

(54) **Sensorik für ein Personenschutzsystem in einem Fahrzeug und Personenschutz-system für ein Fahrzeug**
Sensor system for a person protection system of a vehicle and person protection system for a vehicle
Système de capteurs pour un système de protection de personnes d'un véhicule et système de protection de personnes pour un véhicule

(30) Priorität: 03.09.2012 DE 102012215555
(43) Veröffentlichungstag der Anmeldung: 05.03.2014
(73) Patentinhaber: ROBERT BOSCH GMBH, 70442 Stuttgart (DE)
(72) Erfinder: Schumacher, Hartmut, 71691 Freiberg (DE)

(56) Entgegenhaltungen:
- EP-A1- 2 110 284
- EP-A2- 1 955 911
- EP-B1- 0 926 018
- DE-A1- 19 609 290
- DE-A1-102007 012 461
- DE-A1-102008 008 160
- DE-A1-102008 042 641

## Beschreibung

### Stand der Technik

Die Erfindung geht aus von einer Sensorik für ein Personenschutzsystem in einem Fahrzeug nach der Gattung des unabhängigen Patentanspruchs 1 und von einem Personenschutzsystem für ein Fahrzeug nach der Gattung des unabhängigen Patentanspruchs 14.

Aus dem Stand der Technik bekannte Fußgängerschutzsysteme verfügen über eine Sensorik, die unmittelbar in die Stoßfänger von Fahrzeugen eingebaut wird. So können beispielsweise Drucksensoren zur Messung des Drucks innerhalb eines Druckschlauchs über die ganze vordere Fahrzeugbreite verteilt, oder Beschleunigungssensoren im vorderen Stoßfängerbereich eingesetzt werden. Ziel dieser Sensoren ist es, bei einer Kollision des Fahrzeugs mit einem Fußgänger durch Aktivierung von verschiedenen Maßnahmen, wie beispielsweise Aufstellung einer Motorhaube, Aktivierung von fahrzeugexternen Airbags usw., die Unfallschwere für den Fußgänger zu senken. Zusätzlich verfügen die Fahrzeuge über Insassenschutzsysteme mit korrespondierenden Steuergeräten, welche einen Frontcrash mit einem anderen Fahrzeug oder einem Hindernis durch Auswertung von im Fahrzeugfrontbereich angeordneten Up-Front-Beschleunigungssensoren und/oder von internen Beschleunigungs- und/oder Körperschallsensoren erkennen können. Die eingesetzten Druck- und/oder Beschleunigungssensoren können dabei über standardisierte Sensorschnittstellen, welche beispielsweise als PSI-Schnittstellenbausteine ausgeführt sind, mit den korrespondierenden Steuergeräten des Fußgängerschutzsystems und/oder des Insassenschutzsystems verbunden werden. Alternativ

kann für das Fußgängerschutzsystem und das Insassenschutzsystem ein gemeinsames Steuergerät verwendet werden.

Die DE 196 09 290 A1 offenbart ein Airbagsystem zum Schutz von Fahrzeuginsassen mit einer Mehrzahl von Sensormodulen, welche über Leitungen mit einer Schnittstelle eines entfernt angeordneten Steuergeräts verbunden sind. Das Steuergerät steuert ein Rückhaltemittel für Fahrzeuginsassen an. Die Ausgangssignale der Sensormodule werden in Gestalt analoger Gegentaktsignale oder in Form einer Impulsfolge zum Steuergerät übertragen. Die Schnittstelle kann die Energieversorgung zu den Sensormodulen einschalten oder ausschalten. Insbesondere kann im Fall eines Kurzschlusses innerhalb eines der Sensormodule bzw. auf den Verbindungsleitungen vom Steuergerät zu den Sensormodulen die Spannungsversorgung der Sensormodule abgeschaltet werden, um die Energiereserve zu schonen und den Betrieb der anderen, gegebenenfalls noch funktionsfähigen Sensormodule sicherzustellen.

Die EP 1 955 911 A2 offenbart ein Verfahren und eine Vorrichtung zur Ansteuerung von Personenschutzmitteln, welche eine Sensorik mit mindestens einer im Fahrzeugfrontbereich angeordneten Sensoreinheit, welche mindestens einen Sensor zur Erfassung einer physikalischen Größe umfasst, einer Auswerte- und Steuereinheit, welche die erfasste physikalische Größe zur Crasherkennung auswertet, und mindestens einer Schnittstelleneinheit umfasst, welche den mindestens einen Sensor der mindestens einen Sensoreinheit mit Energie versorgt und elektrische Signale, welche die erfasste physikalische Größe repräsentieren, von dem mindestens einen Sensor an die Auswerte- und Steuereinheit überträgt, wobei eine erste Sensoreinheit physikalische Größen zur Erkennung einer Kollision mit einem Fußgänger erfasst.

### Offenbarung der Erfindung

Die erfindungsgemäße Sensorik für ein Personenschutzsystem in einem Fahrzeug mit den Merkmalen des unabhängigen Patentanspruchs 1 sowie das erfindungsgemäße Personenschutzsystem für ein Fahrzeug mit den Merkmalen des unabhängigen Patentanspruchs 14 haben demgegenüber den Vorteil, dass eine Rückwirkung einer Kollision des Fahrzeugs mit einem anderen Objekt auf das Personenschutzsystem verhindert wird, wenn das Fahrzeug über ein Fußgängerschutzsystem verfügt, dessen Sensoren in einer vorderen Stoßabsorptionszone des Fahrzeugs angeordnet sind. Die Sensoren des Fußgängerschutzsystems können nämlich bei einem Fahrzeugcrash zerstört werden, so dass es zu Kurzschlüssen auf den Verbindungen zwischen einem Steuergerät bzw. einer korrespondierenden Schnittstelle und den Sensoren kommen kann. Diese Kurzschlüsse können den Schnittstellenstrom bis zu einer vorgegebenen Kurzschlussstrombegrenzungsschwelle erhöhen und so auf das Personenschutzsystem zurückwirken. Aus Robustheitsgründen sollte der Kurzschlussstrom für eine vorgegebenen Zeitspanne, von beispielsweise zumindest 10ms, von der Schnittstelle bereitgestellt werden, um einen vorgegebenen PSI-Standard zu erfüllen. Werden in einem neuen System beispielsweise bis zu sieben Fußgängerschutzsensoren in Punkt zu Punkt Verbindungstopologie, in BUS Topologie oder in einer Mischung aus beiden Topologien mit dem Steuergerät verbunden, dann kann es im "worst case" zu sehr hohen sich aufsummierenden Kurzschlussströmen kommen. Bei fünf Sensoren, die in einer Punkt zu Punkt Sensor Topologie mit dem Steuergerät verbunden sind, können sich beispielsweise die fünf Kurzschlussströme der einzelnen Sensoren von ca. 130mA zu einem Gesamtkurzschlussstrom von ca. 650mA summieren.

Daher unterscheiden Ausführungsformen der vorliegenden Erfindung im Energiemanagement eines Personenschutzsystems zwischen einer Kollision des Fahrzeugs mit einem Fußgänger und einer Kollision des Fahrzeugs mit einem anderen Objekt. Dadurch kann die Versorgung der Fußgängerschutzsensoren in vorteilhafter Weise nur dann aufrechterhalten werden, wenn dies für diese Schutzfunktion erforderlich ist. Dieser Ansatz wird genutzt, um die Stromversorgung nicht mit dem Vorhalt der Kurzschlussstrombereitstellung für zerstörte Fußgängerschutzsensoren bei einem Frontcrash zusätzlich zu belasten. Dadurch können in vorteilhafter Weise auf eine größere Stromversorgung, eine größere Energiereserve verzichtet und ein sinnloser Abfluss von Energie vermieden werden.

Ausführungsformen der vorliegenden Erfindung stellen eine Sensorik für ein Personenschutzsystem in einem Fahrzeug zur Verfügung, welche mindestens eine im Fahrzeugfrontbereich angeordnete Sensoreinheit, welche mindestens einen Sensor zur Erfassung einer physikalischen Größe umfasst, eine Auswerte- und Steuereinheit, welche die erfasste physikalische Größe zur Crasherkennung auswertet, und mindestens eine Schnittstelleneinheit umfasst, welche den mindestens einen Sensor der mindestens einen Sensoreinheit mit Energie versorgt und elektrische Signale, welche die erfasste physikalische Größe repräsentieren, von dem mindestens einen Sensor an die Auswerte- und Steuereinheit überträgt, wobei eine erste Sensoreinheit physikalische Größen zur Erkennung einer Kollision mit einem Fußgänger erfasst. Erfindungsgemäß schaltet die Auswerte- und Steuereinheit während des Fahrbetriebs über die mindestens eine Schnittstelleneinheit einen Stromfluss für die einzelnen Sensoren der ersten Sensoreinheit in Abhängigkeit von einem ermittelten Fahrzustand ab oder ein oder reduziert einen für die einzelnen Sensoren der ersten Sensoreinheit bereitzustellenden Kurzschlussstrom.

Des Weiteren wird ein Personenschutzsystem für ein Fahrzeug mit einer erfindungsgemäßen Sensorik, welche mindestens eine im Fahrzeugfrontbereich angeordnete Sensoreinheit, welche mindestens einen Sensor zur Erfassung einer physikalischen Größe umfasst, eine Auswerte- und Steuereinheit, welche die erfasste physikalische Größe zur Crasherkennung auswertet, und mindestens eine Schnittstelleneinheit umfasst, welche den mindestens einen Sensor der mindestens einen Sensoreinheit mit Energie versorgt und elektrische Signale, welche die erfasste physikalische Größe repräsentieren, von dem mindestens einen Sensor an die Auswerte- und Steuereinheit überträgt, und mit Personenschutzmitteln vorgeschlagen, welche durch Auslösesignale aktivierbar sind, welche die Auswerte- und Steuereinheit erzeugt und ausgibt, wobei eine erste Sensoreinheit physikalische Größen zur Erkennung einer Kollision mit einem Fußgänger erfasst.

Unter der Auswerte- und Steuereinheit kann vorliegend ein elektrisches Gerät, wie beispielsweise ein Steuergerät, insbesondere ein Airbagsteuergerät, oder eine als Mikrocontroller ausgeführte Rechnereinheit für ein solches Steuergerät verstanden werden, welches erfasste Sensorsignale verarbeitet bzw. auswertet. Die Auswerte- und Steuereinheit kann mindestens eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Auswerte- und Steuereinheit beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind. Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung der Auswertung verwendet wird, wenn das Programm von der Auswerte- und Steuereinheit ausgeführt wird.

Durch die in den abhängigen Ansprüchen aufgeführten Maßnahmen und Weiterbildungen sind vorteilhafte Verbesserungen der im unabhängigen Patentanspruch 1 angegebenen Sensorik für ein Personenschutzsystem in einem Fahrzeug möglich.

In vorteilhafter Ausgestaltung der erfindungsgemäßen Sensorik erfasst zumindest eine zweite Sensoreinheit physikalische Größen zur Erkennung einer Kollision mit einem anderen Objekt. Die zweite Sensoreinheit umfasst beispielsweise so genannte Up-Front Beschleunigungssensoren, welche bei einem Frontcrash mit einem anderen Objekt, wie beispielsweise einem Fahrzeug, einer Mauer, einem Baum usw., von der Auswerte- und Steuereinheit ausgewertet werden, welche eine solche Kollision des Fahrzeugs mit einem anderen Objekt erkennt. Des Weiteren kann die Auswerte- und Steuereinheit Signale von anderen internen Beschleunigungs- und/oder Körperschallsensoren zur Erkennung der Kollision des Fahrzeugs mit einem anderen Objekt auswerten.

In weiterer vorteilhafter Ausgestaltung der erfindungsgemäßen Sensorik empfängt die Auswerte- und Steuereinheit Informationen über den aktuellen Fahrzustand, wie beispielsweise über die Geschwindigkeit oder andere fahrdynamische Größen, über mindestens eine Busschnittstelle, welche mit einem Fahrzeugbus verbunden ist, welcher beispielsweise als CAN-Bus und/oder Flexray-Bus ausgeführt ist.

Besonders vorteilhaft ist, dass Ausführungsformen der vorliegenden Erfindung mehrere Verbesserungen umfassen, welche einzeln oder in Summe angewendet werden können. Da Fußgängerschutzsysteme in der Regel nur bis zu einer bestimmten Fahrzeuggeschwindigkeit, von beispielsweise 55km/h wirksam sind, kann die Auswerte- und Steuereinheit beispielsweise einen ersten Fahrzustand zum Abschalten des Stromflusses dann erkennen, wenn eine Fahrzeuggeschwindigkeit einen ersten Schwellwert überschreitet. Nach dem Abschalten des Stromflusses kann die Auswerte- und Steuereinheit einen zweiten Fahrzustand zum Einschalten des Stromflusses erkennen, wenn die Fahrzeuggeschwindigkeit den ersten Schwellwert wieder unterschreitet. Durch eine solche Bewertung der Fahrzeuggeschwindigkeit kann eine Abschaltschwelle und eine Einschaltschwelle für die betroffene erste Sensoreinheit definiert werden. Diese setzen sich aus der maximalen Fahrzeuggeschwindigkeit, bis zu der das Fußgängerschutzsystem wirksam ist, und einer Zeitspanne zusammen, welche zum Starten der ersten Sensoreinheit erforderlich ist.

In weiterer vorteilhafter Ausgestaltung der erfindungsgemäßen Sensorik erkennt die Auswerte- und Steuereinheit einen dritten Fahrzustand zum Abschalten des Stromflusses, wenn eine Kollision mit einem anderen Objekt vorliegt. Wird eine solche Kollision von der Auswerte- und Steuereinheit erkannt, dann ist eine Auswertung der Sensoren des Fußgängerschutzsystems nicht mehr erforderlich und die korrespondierende erste Sensoreinheit kann abgeschaltet werden. Der Vorteil dieser Maßnahme liegt darin, dass mit üblichen Erkennungszeiten von ca. 10ms einer solchen Frontkollision das Eindringen eines Hindernisses in die Fahrzeugfrontpartie noch gering ist. Daher können Kurzschlüsse durch Zerstörung in den Sensoren oder Kabeln zu den Fußgängerschutzsensoren bis zu einer bestimmten Crashgeschwindigkeit von ca. 60km/h weitestgehend vermieden werden.

In weiterer vorteilhafter Ausgestaltung der erfindungsgemäßen Sensorik kann die mindestens eine Schnittstelleneinheit über Stromkanäle mit den einzelnen Sensoren oder mit Sensorgruppen verbunden werden, welche eine bestimmte Anzahl von Sensoren umfassen, wobei die mindestens eine Schnittstelleneinheit für jeden Stromkanal eine Treiberstromquelle aufweisen kann.

In weiterer vorteilhafter Ausgestaltung der erfindungsgemäßen Sensorik kann die mindestens eine Schnittstelleneinheit für jede Treiberstromquelle eine erste individuelle Abgleichmöglichkeit vorsehen, welche einen maximalen Kurzschlussstrom in Abhängigkeit von ermittelten Lastanforderungen über ein N-Bit-Datenwort einstellt. Dadurch kann in vorteilhafter Weise der maximale Kurzschlussstrom für eine Treiberstromquelle, die einen Stromkanal der Schnittstelleneinheit versorgt, in Abhängigkeit von der individuellen Nutzung, d.h. in Abhängigkeit von der Anzahl der in einem Stromkanal verwendeten Sensoren eingestellt werden. Nach PSI-Standard können beispielsweise bis zu vier Sensoren pro Stromkanal eingesetzt werden. Da Ausführungsformen der erfindungsgemäßen Sensorik jedoch jeweils nur einen Sensor pro Stromkanal einsetzen, kann der maximale Kurschlussstrom entsprechend reduziert werden.

In weiterer vorteilhafter Ausgestaltung der erfindungsgemäßen Sensorik kann die mindestens eine Schnittstelleneinheit für jede Treiberstromquelle eine zweite individuelle Abgleichmöglichkeit vorsehen, welche die Kurzschlussstromtoleranz verringert, wobei der Abgleichwert als N-Bit-Datenwort zur Verfügung gestellt ist. Der Abgleichwert zur Reduzierung der Kurzschlussstromtoleranz kann beispielsweise für jeden Stromkanal vorab durch Tests ermittelt werden, bei welchen der reale Kurzschlussstrom für jeden Stromkanal ermittelt wird. Dadurch kann der hohe Toleranzwert von ca. 30% für den Kurzschlussstrom auf einen wesentlich geringeren Toleranzwert von beispielsweise 5% reduziert werden.

Durch die Reduzierung des maximalen Kurzschlussstroms und/oder der Toleranz des Kurzschlussstroms für jeden Stromkanal der Schnittstelleneinheit lässt sich in vorteilhafter Weise der Energieabfluss in externe Kurzschlüsse an den Stromkanälen der Schnittstelleneinheit ohne Funktionseinschränkung reduzieren.

In weiterer vorteilhafter Ausgestaltung der erfindungsgemäßen Sensorik kann das N-Bit-Datenwort in der Schnittstelleneinheit an eine N-Bit-Abgleichanordnung angelegt werden, welche den Kurzschlussstrom der korrespondierenden Treiberstromquelle entsprechend individuell einstellt. Das N-Bit-Datenwort für die erste und/oder zweite Abgleichmöglichkeit kann beispielsweise über einen in der Schnittstelleneinheit angeordneten Speicher direkt in der Schnittstelleneinheit zur Verfügung gestellt werden. Zusätzlich oder alternativ kann die Auswerte- und Steuereinheit das N-Bit-Datenwort für die erste und/oder zweite Abgleichmöglichkeit der Schnittstelleneinheit über einen SPI-Bus zur Verfügung stellen.

In weiterer vorteilhafter Ausgestaltung der erfindungsgemäßen Sensorik kann die Auswerte- und Steuereinheit aufgrund eines erkannten Kurzschlusses zwischen einer Schnittstelleneinheit und der mindestens einen Sensoreinheit einen korrespondierenden Stromkanal der Schnittstelleneinheit über einen Hardware-Schalter deaktivieren. Durch diese Maßnahme können Abschaltgeschwindigkeiten nahe der geforderten Mindestzeit von ca. 10ms erreicht werden. Bisher wird eine softwareüberwachte Schnittstellenabschaltung eingesetzt. Diese liegt in der Regel deutlich über der Mindestzeit von ca. 10ms, da Programmlaufzeiten hinzukommen. Auch diese Maßnahme reduziert in vorteilhafter Weise den Energieabfluss im Crashfall und ermöglicht die geforderte Autarkiezeit ohne eine zusätzliche Vergrößerung der Energiereserven.

Ausführungsbeispiele der Erfindung sind in den Zeichnungen dargestellt und werden in der nachfolgenden Beschreibung näher erläutert. In den Zeichnungen bezeichnen gleiche Bezugszeichen Komponenten bzw. Elemente, die gleiche bzw. analoge Funktionen ausführen.

### Kurze Beschreibung der Zeichnungen

Fig. 1 zeigt ein schematisches Blockdiagramm eines Ausführungsbeispiels einer erfindungsgemäßen Sensorik für ein Personenschutzsystem in einem Fahrzeug.
Fig. 2 und 3 zeigen jeweils eine detaillierte Darstellung einer Schnittstelleneinheit für die erfindungsgemäße Sensorik für ein Personenschutzsystem in einem Fahrzeug aus Fig. 1.
Fig. 4 zeigt eine schematische Kennlinie des Verlaufs eines Versorgungsstroms für eine Schnittstelleneinheit eines herkömmlichen Personenschutzsystems im Kurzschlussfall.
Fig. 5 zeigt schematische Kennlinien der Verläufe eines Versorgungsstroms für eine Schnittstelleneinheit und der Fahrzeuggeschwindigkeit in Abhängigkeit von der Zeit gemäß der erfindungsgemäßen Sensorik für ein Personenschutzsystem in einem Fahrzeug aus Fig. 1.
Fig. 6 zeigt schematische Kennlinien der Verläufe einer Eindringtiefe und des Versorgungsstroms für eine Schnittstelleneinheit in Abhängigkeit von der Zeit im Crashfall gemäß der erfindungsgemäßen Sensorik für ein Personenschutzsystem in einem Fahrzeug aus Fig. 1.

### Ausführungsformen der Erfindung

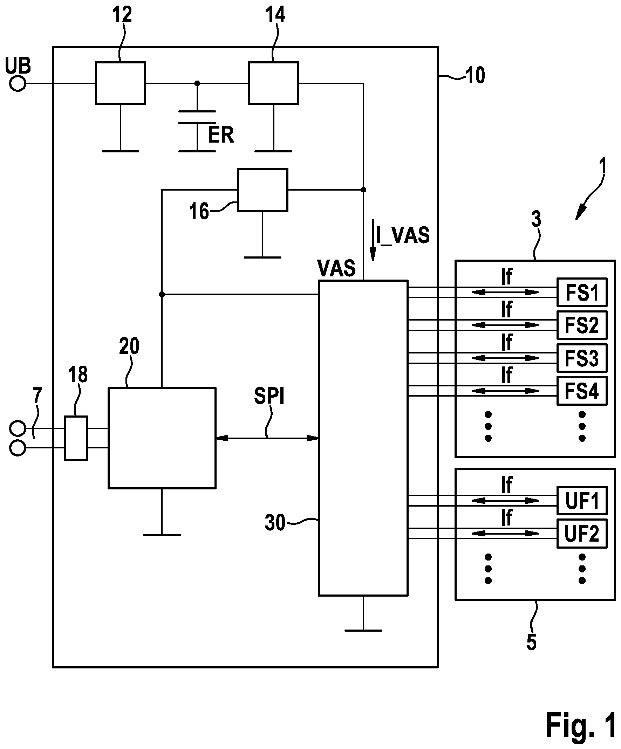

Wie aus Fig. 1 bis 3 ersichtlich ist, umfasst eine erfindungsgemäßen Sensorik für ein Personenschutzsystem in einem Fahrzeug mindestens eine im Fahrzeugfrontbereich 1 angeordneten Sensoreinheit 3, 5, welche mindestens einen Sensor FS1, FS2, FS3, FS4, UF1, UF2 zur Erfassung einer physikalischen Größe umfasst, eine Auswerte- und Steuereinheit 20, welche die erfasste physikalische Größe zur Crasherkennung auswertet, und mindestens eine Schnittstelleneinheit 30, welche den mindestens einen Sensor FS1, FS2, FS3, FS4, UF1, UF2 der mindestens einen Sensoreinheit 3, 5 mit Energie versorgt und elektrische Signale, welche die erfasste physikalische Größe repräsentieren, von dem mindestens einen Sensor FS1, FS2, FS3, FS4, UF1, UF2 an die Auswerte- und Steuereinheit 20 überträgt. Im dargestellten Ausführungsbeispiel erfasst eine erste Sensoreinheit 3 physikalische Größen zur Erkennung einer Kollision mit einem Fußgänger. Erfindungsgemäß schaltet die Auswerte- und Steuereinheit 20 während des Fahrbetriebs über die mindestens eine Schnittstelleneinheit 30 einen Stromfluss If, Ix für die einzelnen Sensoren FS1, FS2, FS3, FS4 der ersten Sensoreinheit 3 in Abhängigkeit von einem ermittelten Fahrzustand ab oder ein oder reduziert einen für die einzelnen Sensoren FS1, FS2, FS3, FS4 der ersten Sensoreinheit 3 bereitzustellenden Kurzschlussstrom Ix.

Die Auswerte- und Steuereinheit 20 erkennt beispielsweise einen ersten Fahrzustand zum Abschalten des Stromflusses If, Ix, wenn eine Fahrzeuggeschwindigkeit v_Fzg einen ersten Schwellwert vmax_FGoff überschreitet. Die Auswerte- und Steuereinheit 20 erkennt nach dem Abschalten des Stromflusses If, Ix einen zweiten Fahrzustand zum Einschalten des Stromflusses If, Ix, wenn die Fahrzeuggeschwindigkeit v_Fzg den ersten Schwellwert vmax_FGoff wieder unterschreitet. Die Auswerte- und Steuereinheit 20 erkennt beispielsweise einen dritten Fahrzustand zum Abschalten des Stromflusses If, Ix, wenn eine Kollision mit einem anderen Objekt vorliegt.

Im dargestellten Ausführungsbeispiel ist die Auswerte- und Steuereinheit 20 als Mikrocontroller eines Steuergeräts 10 für ein Personenschutzsystem eines Fahrzeugs ausgeführt. Zur Bereitstellung einer Versorgungsspannung VAS im Bereich von 6 bis 11V und eines Versorgungsstroms I_VAS aus einer Batteriespannung UB umfasst das Steuergerät 10 neben der Auswerte- und Steuereinheit 20 und der Schnittstelleneinheit 30, die beispielsweise als PSI5-n-Kanalschnittstellenbaustein ausgeführt ist, einen ersten DC/DC-Wandler 12, der beispielsweise als Aufwärtswandler ausgeführt ist, einen zweiten DC/DC-Wandler 14, der als Abwärtswandler ausgeführt ist, eine Energiereserve ER und einen linearen Spannungsregler 16. Die Energiereserve ER kann beispielsweise als Aluminium-Elektrolytkondensatoranordnung, Polymer-Aluminium-Kondensatoranordnung und/oder Doppelschicht-Elektrolytkondensatoranordnung ausgeführt werden. Das Personenschutzsystem umfasst nicht dargestellte Fußgängerschutzmittel, wie beispielsweise eine aufstellbare Motorhaube, einen fahrzeugexternen Airbag usw., und nicht dargestellte Insassenschutzmittel, wie beispielsweise im Fahrzeuginnenraum angeordnete Airbags, automatische Gurtstraffer usw., welche durch Auslösesignale aktivierbar sind, welche die Auswerte- und Steuereinheit 20 erzeugt und ausgibt.

Die erste Sensoreinheit 3 für ein Fußgängerschutzsystem verfügt im dargestellten Ausführungsbeispiel über m Sensoren, von denen beispielhaft vier Sensoren FS1, FS2, FS3, FS4 dargestellt sind. Die Sensoren FS1, FS2, FS3, FS4 der ersten Sensoreinheit 3 sind beispielsweise als Drucksensoren zur Messung des Drucks innerhalb eines Druckschlauchs, welcher über die ganze vordere Fahrzeugbreite verläuft, oder als Beschleunigungssensoren ausgeführt, welche im vorderen Stoßfängerbereich verteilt angeordnet sind. Die Aufgabe der Sensoren FS1, FS2, FS3, FS4 der ersten Sensoreinheit 3 ist es, Informationen bereitzustellen, aus welchen die Auswerte- und Steuereinheit 20 eine Kollision des Fahrzeugs mit einem Fußgänger erkennen kann, so dass die Auswerte- und Steuereinheit 20 durch Aktivierung verschiedener Maßnahmen, wie beispielsweise Aufstellung der Motorhaube, Aktivierung von fahrzeugexternen Airbags usw., die Unfallschwere senken kann.

Im dargestellten Ausführungsbeispiel erfasst zumindest eine zweite Sensoreinheit 5 eines Insassenschutzsystems physikalische Größen zur Erkennung einer Kollision des Fahrzeugs mit einem anderen Objekt. Die zweite Sensoreinheit 5 des Insassenschutzsystems umfasst k Sensoren, von denen beispielhaft zwei Sensoren UF1, UF2 dargestellt sind. Die Sensoren UF1, UF2 der zweiten Sensoreinheit 5 sind beispielsweise als Up-Front Beschleunigungssensoren ausgeführt, deren Signale zur Erkennung eines Front-Crash des Fahrzeugs mit einem anderen Objekt, wie einem Fahrzeug, einer Mauer, einem Baum usw., von der Auswerte- und Steuereinheit 20 ausgewertet werden. Zusätzlich kann die Auswerte- und Steuereinheit 20 Signale von nicht dargestellten internen Beschleunigungs- und/oder Körperschallsensoren auswerten, die beispielsweise zentral im Fahrzeug angeordnet sind. Zudem empfängt die Auswerte- und Steuereinheit 20 Informationen über den aktuellen Fahrzustand über mindestens eine Busschnittstelle 18 und kommuniziert über einen steuergeräteinternen SPI-Bus mit der als PSI5-Schnittstellenbaustein ausgeführten Schnittstelleneinheit 30. Die Busschnittstelle 18 verbindet die Auswerte- und Steuereinheit 20 mit einem Fahrzeugbus, der vorzugsweise als CAN-Bus und/oder Flexray-Bus ausgeführt ist.

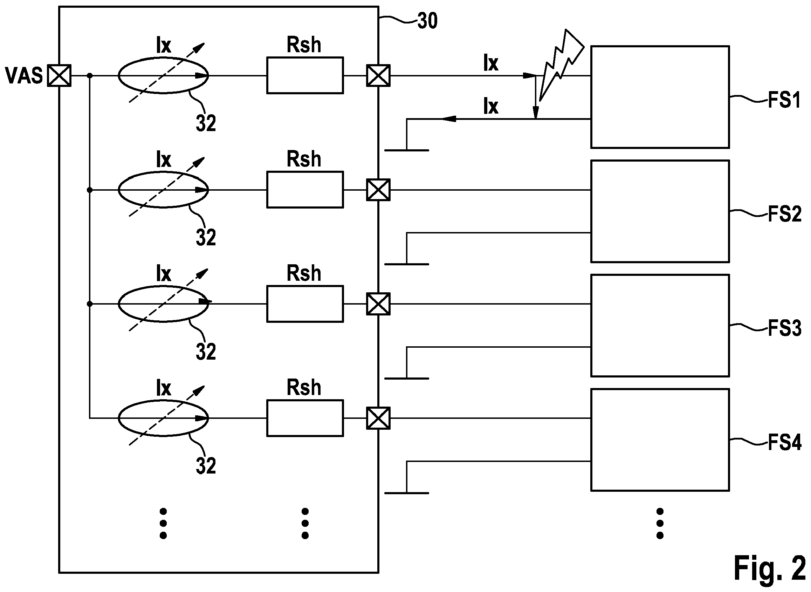

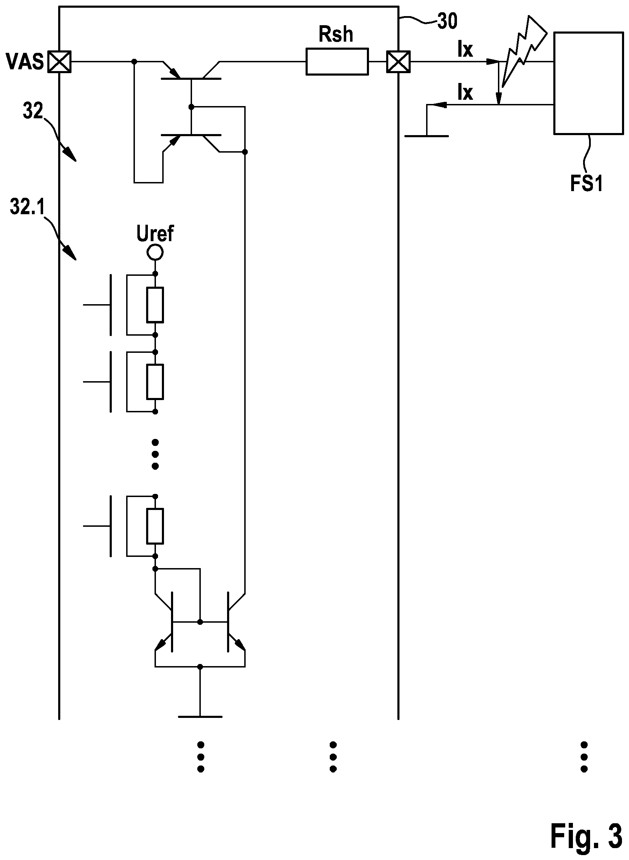

Die Sensoren FS1, FS2, FS3, FS4, UF1, UF2 der ersten und zweiten Sensoreinheit 3, 5 sind über standardisierte Stromkanäle mit der als PSI5-Schnittstellenbaustein ausgeführten Schnittstelleneinheit 30 verbunden. Im dargestellten Ausführungsbeispiel ist jeder Sensor FS1, FS2, FS3, FS4, UF1, UF2 über einen individuellen Stromkanal mit der Schnittstelleneinheit 30 verbunden. Alternativ können mehrere Sensoren zu einer Sensorgruppe zusammengefasst und über einen Stromkanal mit der Schnittstelleneinheit 30 verbunden werden. Wie aus Fig. 2 und 3 weiter ersichtlich ist, weist die Schnittstelleneinheit 30 für jeden Stromkanal eine individuelle Treiberstromquelle 32 mit einem zugehörigen ohmschen Widerstand Rsh auf.

Die Schnittstelleneinheit 30 sieht für jede Treiberstromquelle 32 eine erste individuelle Abgleichmöglichkeit vor, welche einen maximalen Kurzschlussstrom in Abhängigkeit von ermittelten Lastanforderungen über ein N-Bit-Datenwort einstellt. Dadurch kann in vorteilhafter Weise der maximale Kurzschlussstrom Ix für eine Treiberstromquelle 32, die einen Stromkanal der Schnittstelleneinheit 30 versorgt, in Abhängigkeit von der individuellen Nutzung, d.h. in Abhängigkeit von der Anzahl der in einem Stromkanal verwendeten Sensoren FS1, FS2, FS3, FS4, eingestellt werden. Nach PSI-Standard können beispielsweise bis zu vier Sensoren pro Stromkanal eingesetzt werden. Da Ausführungsformen der erfindungsgemäßen Sensorik jedoch jeweils nur einen Sensor FS1, FS2, FS3, FS4 pro Stromkanal einsetzen, kann der maximale Kurschlussstrom Ix für die jeweilige Treiberstromquelle 32 entsprechend reduziert werden.

Zudem sieht die Schnittstelleneinheit 30 für jede Treiberstromquelle 32 eine zweite individuelle Abgleichmöglichkeit vor, welche die Kurzschlussstromtoleranz verringert, wobei der Abgleichwert ebenfalls als N-Bit-Datenwort zur Verfügung gestellt ist. Der Abgleichwert zur Reduzierung der Kurzschlussstromtoleranz kann beispielsweise für jeden Stromkanal vorab durch Tests ermittelt werden, bei welchen der reale Kurzschlussstrom Ix für jeden Stromkanal ermittelt wird. Dadurch kann der hohe Toleranzwert von ca. 30% für den Kurzschlussstrom auf einen wesentlich geringeren Toleranzwert von beispielsweise 5% reduziert werden.

Durch die individuelle Reduzierung des maximalen Kurzschlussstroms Ix und/oder der Kurzschlussstromtoleranz für jeden Stromkanal der als PSI5-Schnittstellenbaustein ausgeführten Schnittstelleneinheit 30 kommt es im Crashfall bei Leitungskurzschlüssen zu den Sensoren FS1, FS2, FS3, FS4 der ersten Sensoreinheit 3 zu einem reduzierten Anstieg des Versorgungsstromes I_VAS für die Schnittstelleneinheit 30.

Wie aus Fig. 3 ersichtlich ist, wird das N-Bit-Datenwort in der Schnittstelleneinheit 30 an eine N-Bit-Abgleichanordnung 32.1 angelegt, welche den Kurzschlussstrom Ix der korrespondierenden Treiberstromquelle 32 entsprechend individuell einstellt. Die N-Bit-Abgleichanordnung 32.1 umfasst N Schalttransistoren, von denen drei Schalttransistoren dargestellt sind, und eine mit einer Referenzspannung Uref verbundene Reihenschaltung von N ohmschen Widerständen, von denen ebenfalls drei Widerstände dargestellt sind. Die N ohmschen Widerstände können jeweils einzeln von einem der N Schalttransistoren überbrückt werden. Die Schalttransistoren werden vom N-Bit-Datenwort angesteuert. Das N-Bit-Datenwort für die erste und/oder zweite Abgleichmöglichkeit kann von einem nicht dargestellten Speicher direkt in der Schnittstelleneinheit 30 zur Verfügung gestellt werden, so dass ein so genannter On-Chip-Abgleich möglich ist. Der Speicher kann beispielweise als PROM, EEPROM, Z-Zapping usw. ausgeführt werden. Zusätzlich oder alternativ kann die Auswerte- und Steuereinheit 20 das N-Bit-Datenwort für die erste und/oder zweite Abgleichmöglichkeit der Schnittstelleneinheit 30 über den SPI-Bus SPI zur Verfügung stellen. Des Weiteren können anstelle der als Stromquelle verwendeten Bipolartransistoren Feldeffekttransistoren eingesetzt werden. Zudem können zusätzliche Symmetriewiderstände in den Emitterleitungen der Transistoren eingesetzt werden.

Wird die erste Sensoreinheit 3 für das Fußgängerschutzsystem bei einem Fahrzeugcrash zerstört, kann es zu Kurzschlüssen auf den Verbindungen zwischen der Schnittstelleneinheit 30 und den Sensoren FS1, FS2, FS3, FS4, der ersten Sensoreinheit 3 kommen. Diese Kurzschlüsse erhöhen den Strom If in einem Stromkanal zwischen der Schnittstelleneinheit 30 und einem korrespondierenden Sensor FS1, FS2, FS3, FS4 bis zu einer Strombegrenzungsschwelle von beispielsweise 130mA für den korrespondierenden Kurzschlussstrom Ix. Aus Robustheitsgründen muss der Kurzschlussstrom Ix nach PSI-Standard für eine vorgegebenen Zeitspanne von mindestens 10ms von der Schnittstelleneinheit 30 bereitgestellt werden. Wird in neuen Systemen eine erste Sensoreinheit 3 mit einer hohen Zahl von Sensoren FS1, FS2, FS3, FS4 in einer Punkt zu Punkt Verbindungstopologie, einer BUS Topologie oder in einer Mischung aus beiden Topologien mit der Schnittstelleneinheit 30 verbunden, dann kann es in ungünstigen Fällen in Summe zu einem hohen Versorgungsstrom I_VAS zum Bereitstellen der einzelnen Kurzschlussströme Ix kommen. Bei einer Punkt zu Punkt Verbindungstopologie und vier eingesetzten Sensoren FS1, FS2, FS3, FS4 kann es bei vier einzelnen Kurzschlussströmen Ix von ca. 130mA zu einem Gesamtstrom ΣI_VAS ca. 520mA kommen.

Daher unterscheiden Ausführungsformen der vorliegenden Erfindung zwischen Kollisionen des Fahrzeugs mit einem Fußgänger oder mit anderen Objekten, wie Fahrzeugen, Mauern, Bäumen usw. Durch diese Unterscheidung kann die Versorgung der Sensoren FS1, FS2, FS3, FS4 der ersten Sensoreinheit 3 nur dann aufrechterhalten werden, wenn dies für diese Schutzfunktion erforderlich ist. Dieser Ansatz wird genutzt, um die Stromversorgung nicht mit dem Vorhalt der Kurzschlussstrombereitstellung für zerstörte Sensoren FS1, FS2, FS3, FS4 der ersten Sensoreinheit 3 bei einem Frontcrash mit einem anderen Objekt zusätzlich zu belasten.

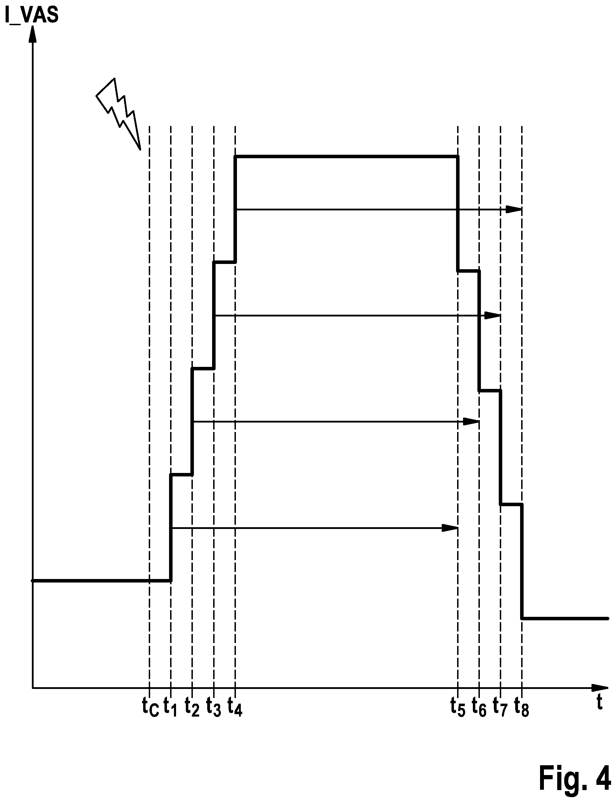

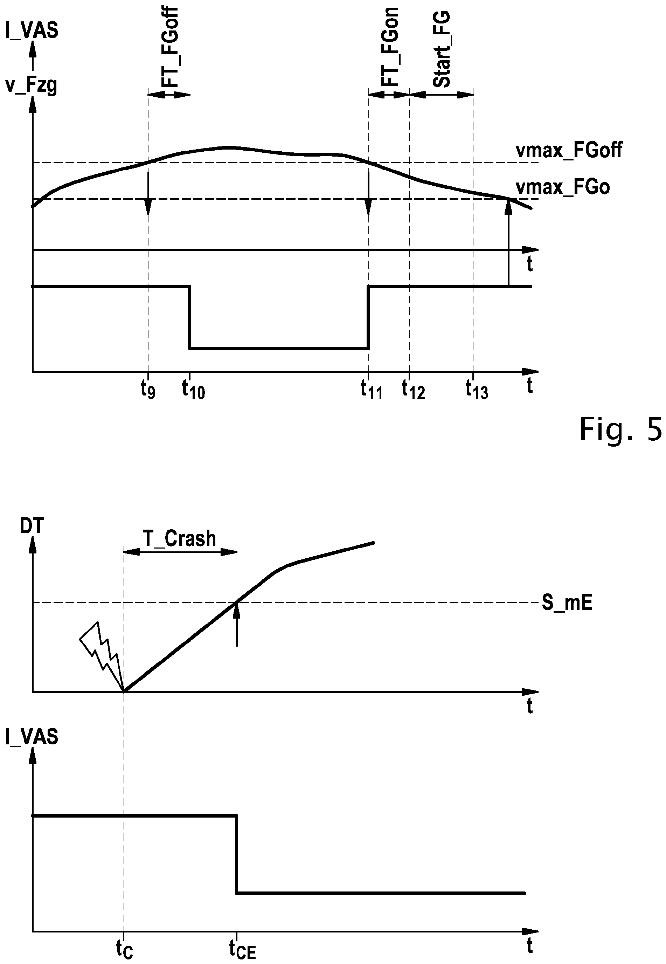

Nachfolgend wird unter Bezugnahme auf Fig. 4 bis 6 die Funktion der erfindungsgemäßen Sensorik für ein Personenschutzsystem in einem Fahrzeug und die Unterschiede zu einer herkömmlichen Sensorik für ein Personenschutzsystem in einem Fahrzeug beschrieben, wobei für die nachfolgende Beschreibung vorausgesetzt wird, dass die erste Sensoreinheit 3 vier Sensoren FS1, FS2, FS3, FS4 und die zweite Sensoreinheit 5 zwei Sensoren UF1, UF2 umfasst. Fig. 4 zeigt den Verlauf des Versorgungsstroms I_VAS für die Schnittstelleneinheit 30 in einem herkömmlichen Personenschutzsystem im Kurzschlussfall. Fig. 5 zeigt die Verläufe des Versorgungsstroms I_VAS der Schnittstelleneinheit 30 und der Fahrzeuggeschwindigkeit v_Fzg in Abhängigkeit von der Zeit t gemäß der erfindungsgemäßen Sensorik für ein Personenschutzsystem in einem Fahrzeug aus Fig. 1. Fig. 6 zeigt die Verläufe einer Eindringtiefe DT und des Versorgungsstroms I_VAS der Schnittstelleneinheit 30 in Abhängigkeit von der Zeit t im Crashfall gemäß der erfindungsgemäßen Sensorik für ein Personenschutzsystem in einem Fahrzeug aus Fig. 1.

Im normalen Fahrzeugbetrieb besteht zwischen der Auswerte- und Steuereinheit 20 über die Schnittstelleneinheit 30 eine Kommunikation zu allen externen im Fronbereich 1 des Fahrzeugs angeordneten Sensoren FS1, FS2, FS3, FS4, UF1, UF2 der ersten und zweiten Sensoreinheit 3, 5.

Wie aus Fig. 4 weiter ersichtlich ist, setzt sich bei einer herkömmlichen Sensorik der Versorgungsstrom I_VAS für alle n Stromkanäle der Schnittstelleneinheit 30 aus den einzelnen Grundströmen If für die vier Sensoren FS1, FS2, FS3, FS4 der ersten Sensoreinheit 3 und die zwei Sensoren UF1, UF2 der zweiten Sensoreinheit 5 zusammen. Der Grundstrom If der einzelnen angeschlossenen Sensoren FS1, FS2, FS3, FS4, UF1, UF2 umfasst jeweils einen statischen Versorgungsstrom und einen mittleren Kommunikationsstrom für den jeweiligen Sensor FS1, FS2, FS3, FS4, UF1, UF2. Für die sechs Sensoren FS1, FS2, FS3, FS4, UF1, UF2 wird bis zu einem Crash, welcher durch einen Zeitpunkt tc repräsentiert wird, jeweils ein Grundstrom von ca. 15mA vorausgesetzt, so dass sich ein Versorgungsstrom I_VAS von ca. 90mA für die Schnittstelleneinheit 30 ergibt. Wird die erste Sensoreinheit 3 des Fußgängerschutzsystems aufgrund ihrer exponierten Anordnung bei der Kollision des Fahrzeugs mit einem anderen Objekt zum Zeitpunkt tc zerstört, dann können die vier Stromkanäle zwischen den Sensoren FS1, FS2, FS3, FS4 der ersten Sensoreinheit 3 und der Schnittstelleneinheit 30 kurzgeschlossen werden. So wird beispielsweise zum Zeitpunkt t1 ein Kurzschluss in einem ersten Stromkanal zu einem ersten Sensor FS1 der ersten Sensoreinheit 3 erkannt und nach Ablauf der vorgegebenen Mindestbereitstellungszeit von mindestens 10ms wird eine softwaregesteuerte Abschaltung des ersten Stromkanals zu einem Zeitpunkt t5 durchgeführt. Dadurch erhöht sich zum Zeitpunkt t1 der Versorgungsstrom I_VAS für die Schnittstelleneinheit 30 um die Differenz zwischen dem maximalen Kurzschlussstrom Ix und dem Grundstrom If des ersten Sensors FS1 der ersten Sensoreinheit 3, und reduziert sich zum Zeitpunkt t5 um den maximalen Kurzschlussstrom Ix. Zum Zeitpunkt t2 wird ein Kurzschluss in einem zweiten Stromkanal zu einem zweiten Sensor FS2 der ersten Sensoreinheit 3 erkannt und nach Ablauf der vorgegebenen Mindestbereitstellungszeit von mindestens 10ms wird eine softwaregesteuerte Abschaltung des zweiten Stromkanals zu einem Zeitpunkt t6 durchgeführt. Dadurch erhöht sich zum Zeitpunkt t2 der Versorgungsstrom I_VAS für die Schnittstelleneinheit 30 um die Differenz zwischen dem maximalen Kurzschlussstrom Ix und dem Grundstrom If des zweiten Sensors FS2 der ersten Sensoreinheit 3, und reduziert sich zum Zeitpunkt t6 um den maximalen Kurzschlussstrom Ix. Zum Zeitpunkt t3 wird ein Kurzschluss in einem dritten Stromkanal zu einem dritten Sensor FS3 der ersten Sensoreinheit 3 erkannt und nach Ablauf der vorgegebenen Mindestbereitstellungszeit von mindestens 10ms wird eine softwaregesteuerte Abschaltung des zweiten Stromkanals zu einem Zeitpunkt t7 durchgeführt. Dadurch erhöht sich zum Zeitpunkt t3 der Versorgungsstrom I_VAS für die Schnittstelleneinheit 30 um die Differenz zwischen dem maximalen Kurzschlussstrom Ix und dem Grundstrom If des dritten Sensors FS3 der ersten Sensoreinheit 3, und reduziert sich zum Zeitpunkt t7 um den maximalen Kurzschlussstrom Ix. Zum Zeitpunkt t4 wird ein Kurzschluss in einem vierten Stromkanal zu einem vierten Sensor FS4 der ersten Sensoreinheit 3 erkannt und nach Ablauf der vorgegebenen Mindestbereitstellungszeit von mindestens 10ms wird eine softwaregesteuerte Abschaltung des zweiten Stromkanals zu einem Zeitpunkt t8 durchgeführt. Dadurch erhöht sich zum Zeitpunkt t4 der Versorgungsstrom I_VAS für die Schnittstelleneinheit 30 um die Differenz zwischen dem maximalen Kurzschlussstrom Ix und dem Grundstrom If des vierten Sensors FS4 der ersten Sensoreinheit 3, und reduziert sich zum Zeitpunkt t8 um den maximalen Kurzschlussstrom Ix. Dadurch ergibt sich im ungünstigsten Fall und dem Ausfall von allen vier Sensoren FS1, FS2, FS3, FS4 der ersten Sensoreinheit 3 zwischen den Zeitpunkten t4 und t5 eine maximale Stromhöhung von insgesamt 460mA, wenn man von einem Grundstrom If von 15mA und einem maximalen Kurzschlussstrom Ix von 130mA ausgeht. Nach dem Zeitpunkt t8 sind alle Sensoren FS1, FS2, FS3, FS4 bzw. Stromkanäle der ersten Sensoreinheit 3 abgeschaltet und die beiden Sensoren UF1, UF2 der zweiten Sensoreinheit 5 werden jeweils weiter mit dem Grundstrom If versorgt.

Wie aus Fig. 5 weiter ersichtlich ist, werden die Sensoren FS1, FS2, FS3, FS4 der ersten Sensoreinheit 3 bzw. die zugehörigen Stromkanäle zwischen der Schnittstelleneinheit 30 und der erste Sensoreinheit 3 abgeschaltet, wenn das Fahrzeug eine vorgegebene maximale Geschwindigkeit vmax_FGgoff überschreitet. Dadurch können in den korrespondierenden Stromkanälen zwischen der Schnittstelleneinheit 30 und der ersten Sensoreinheit 3 bei einem Crash in vorteilhafter Weise keine Kurzschlussströme Ix auftreten. Wie aus Fig. 5 weiter ersichtlich ist, erfolgt die Überschreitung der maximalen Geschwindigkeit vmax_FGgoff zu einem Zeitpunkt t9 und die korrespondierende Abschaltung zu einem Zeitpunkt t10 nach einer Stopp-Filterzeitspanne FT-FGoff von beispielsweise ca. 30ms. Die Abschaltung erfolgt in der Regel über einen SPI-Befehl, den die Auswerte- und Steuereinheit 20 über den SPI-Bus SPI an die Schnittstelleneinheit 30 ausgibt. Dadurch reduziert sich der Versorgungsstrom I_VAS für die Schnittstelleneinheit 30 zum Zeitpunkt t10 um die Summe der Grundströme If der vier Sensoren FS1, FS2, FS3, FS4 der ersten Sensoreinheit 3, da ab dem Zeitpunkt t10 nur noch die beiden Sensoren UF1, UF2 der zweiten Sensoreinheit 5 mit dem Grundstrom If versorgt werden. Die Abschaltung wird vorgenommen, weil Fußgängerschutzsysteme nur bis zu einer oberen Fahrzeuggeschwindigkeit vmax_FGo von beispielsweise 55km/h = 15.27m/s wirksam sind. Durch der Bewertung der Fahrzeuggeschwindigkeit v_Fzg im Steuergerät 10 kann die Abschaltschwelle vmax_FGofffür die betroffenen Stromkanäle definiert werden. Diese setzt sich aus der Kenntnis von der oberen Fahrzeuggeschwindigkeit vmax_FGo und der erforderlichen Zeitspanne zum Starten und Stoppen der ersten Sensoreinheit 3 zusammen. Unter den beispielhaften Voraussetzungen von vmax_FGo von 55km/s, einer Start- bzw. Stopp-Filterzeitspanne FT_FGon, FT_FGoff von 30ms, einer Startzeit Start_FG für die erste Sensoreinheit von maximal 250ms; einer maximalen Bremsverzögerung a_vb = 1 g, einer Reaktionszeit von ca. 0s und einer Bremsansprechzeit von ca. 0s ergibt sich für die maximale Geschwindigkeit vmax_FGoff ein Wert von ca. 65km/h. Sind die Reaktionszeit und die Bremsansprechzeit endlich, dann reduziert sich der Wert für die maximale Geschwindigkeit vmax_FGoff auf ca. 60km/h.

Unterschreitet das Fahrzeug die maximale Geschwindigkeit vmax_FGoff zu einem Zeitpunkt t11 wieder, dann wird nach Ablauf der Start-Filterzeitspanne FT_FGon von ca. 30ms ohne vorliegende Crasherkennung die erste Sensoreinheit 3 zum Zeitpunkt t12 wieder gestartet. Dies erfolgt in der Regel über einen SPI-Befehl, welchen die Auswerte- und Steuereinheit 20 an die Schnittstelleneinheit 30 ausgibt. Die Startzeit Start_FG der ersten Sensoreinheit 3 zwischen dem Zeitpunkt t12 und dem Zeitpunkt t13, an welchem die erste Sensoreinheit 3 volle Funktionalität erreicht, muss ausreichend kurz sein, damit die erste Sensoreinheit 3 bis zum Erreichen der oberen Fahrzeuggeschwindigkeit vmax_FGo als Funktionsgrenze des Fußgängerschutzsystems wieder voll funktionsfähig ist.

Wie aus Fig. 6 weiter ersichtlich ist, werden die Sensoren FS1, FS2, FS3, FS4 bzw. die Stromkanäle der ersten Sensoreinheit 3 abgeschaltet, wenn die Auswerte- und Steuereinheit 20 durch Auswerten der Sensoren UF1, UF2 der zweiten Sensoreinheit 5 oder von zentralen Crashsensoren zu einem Zeitpunkt tCE eine zu einem Zeitpunkt tC erfolgte Kollision mit einem anderen Objekt erkennt. Dadurch reduziert sich der Versorgungsstrom I_VAS für die Schnittstelleneinheit 30 am Zeitpunkt tCE der Erkennung auf die Summe der Grundströme IF der beiden Sensoren UF1, UF2 der zweiten Sensoreinheit 5. Die Sensoren FS1, FS2, FS3, FS4 der ersten Sensoreinheit 3 bleiben bis zum Neustart des Steuergeräts 10 (Power Off/On) abgeschaltet. Ist die Geschwindigkeit des Fahrzeugs gerade etwas kleiner als die maximale Geschwindigkeit vmax_FGoff von ca. 60km/h, dann sind die Sensoren FS1, FS2, FS3, FS4 der ersten Sensoreinheit 3 bzw. deren Stromkanäle noch versorgt. Erfolgt nun ein Frontcrash mit einer Crasherkennungszeitspanne T_Crash im Bereich von beispielsweise 8 bis 10ms, so ergibt sich eine maximale Eindringtiefe S_mE bzw. Verkürzung des Fahrzeugs in der weichen Frontpartie von beispielsweise 13,3 bis 16,6cm. Daher sollten bis zu dieser Eindringtiefe S_mE Kurzschlüsse in den Sensoren FS1, FS2, FS3, FS4 der ersten Sensoreinheit 3 bzw. deren Verbindungsleitungen konstruktiv verhindert werden.

Erkennt die Auswerte- und Steuereinheit 20 eine Kollision mit einem anderen Objekt, dann werden die Sensoren FS1, FS2, FS3, FS4 der ersten Sensoreinheit 3 nicht mehr benötigt. In diesem Fall kann die Abschaltung der Sensoren FS1, FS2, FS3, FS4 bzw. der Stromkanäle der ersten Sensoreinheit 3 sofort erfolgen. Der Vorteil dieser Maßnahme liegt darin, dass mit üblichen Crasherkennungszeitspannen T_Crash das Eindringen eines Hindernisses in die Fahrzeugfrontpartie 1 noch gering ist. Dadurch können Kurzschlüsse durch Zerstörungen in den Sensoren FS1, FS2, FS3, FS4 und/oder Stromkanälen der ersten Sensoreinheit 3 bis zu dieser Crashgeschwindigkeit weitestgehend vermieden werden.

Durch die Einführung einer einstellbaren Hardwareabschaltzeit für die als PSI5-Schnittstellenbaustein ausgeführte Schnittstelleneinheit 30 aufgrund eines detektierten Kurzschlusses, können Abschaltgeschwindigkeiten nahe der geforderten Mindestbereitstellungszeit für den Kurzschlussstrom Ix von ca. 10ms erreicht werden. Bisher wird eine softwareüberwachte Schnittstellenabschaltung eingesetzt. Diese liegt in der Regel deutlich über 10ms, da die Programmlaufzeiten hinzukommen.

## Patentansprüche

1. Sensorik für ein Personenschutzsystem in einem Fahrzeug mit mindestens einer im Fahrzeugfrontbereich (1) angeordneten Sensoreinheit (3, 5), welche mindestens einen Sensor (FS1, FS2, FS3, FS4, UF1, UF2) zur Erfassung einer physikalischen Größe umfasst, einer Auswerte- und Steuereinheit (20), welche die erfasste physikalische Größe zur Crasherkennung auswertet, und mindestens einer Schnittstelleneinheit (30), welche den mindestens einen Sensor (FS1, FS2, FS3, FS4, UF1, UF2) der mindestens einen Sensoreinheit (3, 5) mit Energie versorgt und elektrische Signale, welche die erfasste physikalische Größe repräsentieren, von dem mindestens einen Sensor (FS1, FS2, FS3, FS4, UF1, UF2) an die Auswerte- und Steuereinheit (20) überträgt, wobei eine erste Sensoreinheit (3) physikalische Größen zur Erkennung einer Kollision mit einem Fußgänger erfasst, **dadurch gekennzeichnet, dass** die Auswerte- und Steuereinheit (20) während des Fahrbetriebs über die mindestens eine Schnittstelleneinheit (30) einen Stromfluss (If, Ix) für die einzelnen Sensoren (FS1, FS2, FS3, FS4) der ersten Sensoreinheit (3) in Abhängigkeit von einem ermittelten Fahrzustand abschaltet oder einschaltet oder einen für die einzelnen Sensoren (FS1, FS2, FS3, FS4) der ersten Sensoreinheit (3) bereitzustellenden Kurzschlussstrom (Ix) in Abhängigkeit von einem ermittelten Fahrzustand reduziert.

2. Sensorik nach Anspruch 1, **dadurch gekennzeichnet, dass** zumindest eine zweite Sensoreinheit (5) physikalische Größen zur Erkennung einer Kollision mit einem anderen Objekt erfasst.

3. Sensorik nach Anspruch 1 oder 2, **dadurch gekennzeichnet, dass** die Auswerte- und Steuereinheit (20) Informationen über den aktuellen Fahrzustand über mindestens eine Busschnittstelle (18) empfängt.

4. Sensorik nach einem der Ansprüche 1 bis 3, **dadurch gekennzeichnet, dass** die Auswerte- und Steuereinheit (20) einen ersten Fahrzustand zum Abschalten des Stromflusses (If, Ix) erkennt, wenn eine Fahrzeuggeschwindigkeit (v_Fzg) einen ersten Schwellwert (vmax_FGoff) überschreitet.

5. Sensorik nach Anspruch 3, **dadurch gekennzeichnet, dass** die Auswerte- und Steuereinheit (20) nach dem Abschalten des Stromflusses (If, Ix) einen zweiten Fahrzustand zum Einschalten des Stromflusses (If, Ix) erkennt, wenn die Fahrzeuggeschwindigkeit (v_Fzg) den ersten Schwellwert (vmax_FGoff) wieder unterschreitet.

6. Sensorik nach einem der Ansprüche 1 bis 5, **dadurch gekennzeichnet, dass** die Auswerte- und Steuereinheit (20) einen dritten Fahrzustand zum Abschalten des Stromflusses (If, Ix) erkennt, wenn eine Kollision mit einem anderen Objekt vorliegt.

7. Sensorik nach einem der Ansprüche 1 bis 6, **dadurch gekennzeichnet, dass** die mindestens eine Schnittstelleneinheit (30) über Stromkanäle mit den einzelnen Sensoren (FS1, FS2, FS3, FS4, UF1, UF2) oder mit Sensorgruppen verbunden ist, wobei die mindestens eine Schnittstelleneinheit (30) für jeden Stromkanal eine Treiberstromquelle (32) aufweist.

8. Sensorik nach Anspruch 7, **dadurch gekennzeichnet, dass** die mindestens eine Schnittstelleneinheit (30) für jede Treiberstromquelle (32) eine erste individuelle Abgleichmöglichkeit vorsieht, welche einen maximalen Kurzschlussstrom in Abhängigkeit von ermittelten Lastanforderungen über ein N-Bit-Datenwort einstellt.

9. Sensorik nach Anspruch 7 oder 8, **dadurch gekennzeichnet, dass** die mindestens eine Schnittstelleneinheit (30) für jede Treiberstromquelle (32) eine zweite individuelle Abgleichmöglichkeit vorsieht, welche die Kurzschlussstromtoleranz verringert, wobei der Abgleichwert als N-Bit-Datenwort zur Verfügung gestellt ist.

10. Sensorik nach Anspruch 8 oder 9, **dadurch gekennzeichnet, dass** das N-Bit-Datenwort in der Schnittstelleneinheit (30) an eine N-Bit-Abgleichanordnung (32.1) angelegt ist, welche den Kurzschlussstrom (Ix) der korrespondierenden Treiberstromquelle (32) entsprechend individuell einstellt.

11. Sensorik nach einem der Ansprüche 7 bis 10, **dadurch gekennzeichnet, dass** ein in der Schnittstelleneinheit (30) angeordneter Speicher das N-Bit-Datenwort für die erste und/oder zweite Abgleichmöglichkeit direkt in der Schnittstelleneinheit (30) zur Verfügung stellt.

12. Sensorik nach einem der Ansprüche 7 bis 10, **dadurch gekennzeichnet, dass** die Auswerte- und Steuereinheit (20) das N-Bit-Datenwort für die erste und/oder zweite Abgleichmöglichkeit der Schnittstelleneinheit (30) über einen SPI-Bus zur Verfügung stellt.

13. Sensorik nach einem der Ansprüche 1 bis 12, **dadurch gekennzeichnet, dass** die Auswerte- und Steuereinheit (20) aufgrund eines erkannten Kurzschlusses zwischen einer Schnittstelleneinheit (30) und der mindestens einen Sensoreinheit (3, 5) einen korrespondierenden Stromkanal der Schnittstelleneinheit (30) über einen Hardware-Schalter deaktiviert.

14. Personenschutzsystem für ein Fahrzeug mit einer Sensorik, welche mindestens eine im Fahrzeugfrontbereich (1) angeordnete Sensoreinheit (3, 5), welche mindestens einen Sensor (FS1, FS2, FS3, FS4, UF1, UF2) zur Erfassung einer physikalischen Größe umfasst, eine Auswerte- und Steuereinheit (20), welche die erfasste physikalische Größe zur Crasherkennung auswertet, und mindestens eine Schnittstelleneinheit (30) umfasst, welche den mindestens einen Sensor (FS1, FS2, FS3, FS4, UF1, UF2) der mindestens einen Sensoreinheit (3, 5) mit Energie versorgt und elektrische Signale, welche die erfasste physikalische Größe repräsentieren, von dem mindestens einen Sensor (FS1, FS2, FS3, FS4, UF1, UF2) an die Auswerte- und Steuereinheit (20) überträgt, wobei eine erste Sensoreinheit (3) physikalische Größen zur Erkennung einer Kollision mit einem Fußgänger erfasst, und Personenschutzmitteln, welche durch Auslösesignale aktivierbar sind, welche die Auswerte- und Steuereinheit (20) erzeugt und ausgibt, **dadurch gekennzeichnet, dass** die Sensorik nach einem der Ansprüche 1 bis 13 ausgebildet ist.

## Claims

1. Sensor system for a personal protection system in a vehicle, having at least one sensor unit (3, 5) which is arranged in the vehicle front area (1) and comprises at least one sensor (FS1, FS2, FS3, FS4, UF1, UF2) for recording a physical variable, an evaluation and control unit (20) which evaluates the recorded physical variable in order to detect a crash, and at least one interface unit (30) which supplies the at least one sensor (FS1, FS2, FS3, FS4, UF1, UF2) of the at least one sensor unit (3, 5) with energy and transmits electrical signals representing the recorded physical variable from the at least one sensor (FS1, FS2, FS3, FS4, UF1, UF2) to the evaluation and control unit (20), a first sensor unit (3) recording physical variables in order to detect a collision with a pedestrian, **characterized in that**, during the driving mode, the evaluation and control unit (20) switches a current flow (If, Ix) for the individual sensors (FS1, FS2, FS3, FS4) of the first sensor unit (3) off or on via the at least one interface unit (30) on the basis of a determined driving state or reduces a short-circuit current (Ix) to be provided for the individual sensors (FS1, FS2, FS3, FS4) of the first sensor unit (3) on the basis of a determined driving state.

2. Sensor system according to Claim 1, **characterized in that** at least one second sensor unit (5) records physical variables in order to detect a collision with another object.

3. Sensor system according to Claim 1 or 2, **characterized in that** the evaluation and control unit (20) receives information relating to the instantaneous driving state via at least one bus interface (18).

4. Sensor system according to one of Claims 1 to 3, **characterized in that** the evaluation and control unit (20) detects a first driving state for switching off the current flow (If, Ix) if a vehicle speed (v_Fzg) exceeds a first threshold value (vmax_FGoff).

5. Sensor system according to Claim 3, **characterized in that**, after switching off the current flow (If, Ix), the evaluation and control unit (20) detects a second driving state for switching on the current flow (If, Ix) if the vehicle speed (v_Fzg) falls below the first threshold value (vmax_FGoff) again.

6. Sensor system according to one of Claims 1 to 5, **characterized in that** the evaluation and control unit (20) detects a third driving state for switching off the current flow (If, Ix) if there is a collision with another object.

7. Sensor system according to one of Claims 1 to 6, **characterized in that** the at least one interface unit (30) is connected to the individual sensors (FS1, FS2, FS3, FS4, UF1, UF2) or to sensor groups via current channels, the at least one interface unit (30) having a driver current source (32) for each current channel.

8. Sensor system according to Claim 7, **characterized in that** the at least one interface unit (30) provides, for each driver current source (32), a first individual comparison possibility which sets a maximum short-circuit current on the basis of determined load requirements via an N-bit data word.

9. Sensor system according to Claim 7 or 8, **characterized in that** the at least one interface unit (30) provides, for each driver current source (32), a second individual comparison possibility which reduces the short-circuit current tolerance, the comparison value being provided as an N-bit data word.

10. Sensor system according to Claim 8 or 9, **characterized in that** the N-bit data word in the interface unit (30) is applied to an N-bit comparison arrangement (32.1) which accordingly individually sets the short-circuit current (Ix) of the corresponding driver current source (32).

11. Sensor system according to one of Claims 7 to 10, **characterized in that** a memory arranged in the interface unit (30) provides the N-bit data word for the first and/or second comparison possibility directly in the interface unit (30).

12. Sensor system according to one of Claims 7 to 10, **characterized in that** the evaluation and control unit (20) provides the interface unit (30) with the N-bit data word for the first and/or second comparison possibility via an SPI bus.

13. Sensor system according to one of Claims 1 to 12, **characterized in that** the evaluation and control unit (20) deactivates a corresponding current channel of an interface unit (30) via a hardware switch on account of a detected short circuit between the interface unit (30) and the at least one sensor unit (3, 5).

14. Personal protection system for a vehicle, having a sensor system which comprises at least one sensor unit (3, 5) which is arranged in the vehicle front area (1) and comprises at least one sensor (FS1, FS2, FS3, FS4, UF1, UF2) for recording a physical variable, an evaluation and control unit (20) which evaluates the recorded physical variable in order to detect a crash, and at least one interface unit (30) which supplies the at least one sensor (FS1, FS2, FS3, FS4, UF1, UF2) of the at least one sensor unit (3, 5) with energy and transmits electrical signals representing the recorded physical variable from the at least one sensor (FS1, FS2, FS3, FS4, UF1, UF2) to the evaluation and control unit (20), a first sensor unit (3) recording physical variables in order to detect a collision with a pedestrian, and personal protection means which can be activated by trigger signals generated and output by the evaluation and control unit (20), **characterized in that** the sensor system is designed according to one of Claims 1 to 13.

## Revendications

1. Ensemble de détection pour un système de protection des personnes dans un véhicule, comprenant au moins une unité de détection (3, 5) disposée dans une zone avant de véhicule (1), laquelle comporte au moins un capteur (FS1, FS2, FS3, FS4, UF1, UF2) destiné à collecter une grandeur physique, une unité d'interprétation et de commande (20) qui interprète la grandeur physique collectée en vue de la reconnaissance d'une collision, et au moins une unité d'interface (30) qui alimente en énergie l'au moins un capteur (FS1, FS2, FS3, FS4, UF1, UF2) de l'au moins une unité de détection (3, 5) et transmet des signaux électriques, lesquels représentent la grandeur physique collectée, de l'au moins un capteur (FS1, FS2, FS3, FS4, UF1, UF2) à l'unité d'interprétation et de commande (20), une première unité de détection (3) collectant des grandeurs physiques en vue de reconnaître une collision avec un piéton, **caractérisé en ce que** l'unité d'interprétation et de commande (20), pendant le régime de déplacement, déconnecte ou connecte un flux de courant (If, Ix) pour les capteurs (FS1, FS2, FS3, FS4) individuels de la première unité de détection (3) par le biais de l'au moins une unité d'interface (30) en fonction d'une situation de conduite déterminée, ou réduit un courant de court-circuit (Ix) à fournir pour les capteurs (FS1, FS2, FS3, FS4) individuels de la première unité de détection (3) en fonction d'une situation de conduite déterminée.

2. Ensemble de détection selon la revendication 1, **caractérisé en ce qu'**au moins une deuxième unité de détection (5) collecte des grandeurs physiques en vue reconnaître une collision avec un autre objet.

3. Ensemble de détection selon la revendication 1 ou 2, **caractérisé en ce que** l'unité d'interprétation et de commande (20) reçoit des informations à propos de la situation de conduite actuelle par le biais d'au moins une interface de bus (18).

4. Ensemble de détection selon l'une des revendications 1 à 3, **caractérisé en ce que** l'unité d'interprétation et de commande (20) détecte une première situation de conduite pour déconnecter le flux de courant (If, Ix) lorsqu'une vitesse du véhicule (v_Fzg) dépasse une première valeur de seuil (vmax_FGoff).

5. Ensemble de détection selon la revendication 3, **caractérisé en ce que** l'unité d'interprétation et de commande (20), après la déconnexion du flux de courant (If, Ix), détecte une deuxième situation de conduite pour connecter le flux de courant (If, Ix) lorsque la vitesse du véhicule (v_Fzg) devient de nouveau inférieure à la première valeur de seuil (vmax_FGoff).

6. Ensemble de détection selon l'une des revendications 1 à 5, **caractérisé en ce que** l'unité d'interprétation et de commande (20) détecte une troisième situation de conduite pour déconnecter le flux de courant (If, Ix) lorsqu'il existe une collision avec un autre objet.

7. Ensemble de détection selon l'une des revendications 1 à 6, **caractérisé en ce que** l'au moins une unité d'interface (30) est reliée aux capteurs (FS1, FS2, FS3, FS4, UF1, UF2) individuels ou à des groupes de capteurs par le biais de canaux de courant, l'au moins une unité d'interface (30) possédant une source de courant d'attaque (32) pour chaque canal de courant.

8. Ensemble de détection selon la revendication 7, **caractérisé en ce que** l'au moins une unité d'interface (30) prévoit une première possibilité de compensation individuelle pour chaque source de courant d'attaque (32), laquelle règle un courant de court-circuit maximum par le biais d'un mot de données de N bits en fonction des exigences de charge déterminées.

9. Ensemble de détection selon la revendication 7 ou 8, **caractérisé en ce que** l'au moins une unité d'interface (30) prévoit une deuxième possibilité de compensation individuelle pour chaque source de courant d'attaque (32), laquelle réduit la tolérance au courant de court-circuit, la valeur de compensation étant mise à disposition sous la forme d'un mot de données de N bits.

10. Ensemble de détection selon la revendication 8 ou 9, **caractérisé en ce que** le mot de données de N bits dans l'unité d'interface (30) est appliqué à un arrangement de compensation à N bits (32.1) qui règle individuellement en conséquence le courant de court-circuit (Ix) de la source de courant d'attaque (32) correspondante.

11. Ensemble de détection selon l'une des revendications 7 à 10, **caractérisé en ce qu'**une mémoire disposée dans l'unité d'interface (30) met à disposition le mot de données de N bits pour la première et/ou la deuxième possibilité de compensation directement dans l'unité d'interface (30).

12. Ensemble de détection selon l'une des revendications 7 à 10, **caractérisé en ce que** l'unité d'interprétation et de commande (20) met à disposition le mot de données de N bits pour la première et/ou la deuxième possibilité de compensation de l'unité d'interface (30) par le biais d'un bus SPI.

13. Ensemble de détection selon l'une des revendications 1 à 12, **caractérisé en ce que** l'unité d'interprétation et de commande (20), du fait d'un court-circuit détecté entre une unité d'interface (30) et l'au moins une unité de détection (3, 5), désactive un canal de courant correspondant de l'unité d'interface (30) par le biais d'un commutateur matériel.

14. Système de protection des personnes pour un véhicule doté d'un ensemble de détection, lequel comprend au moins une unité de détection (3, 5) disposée dans une zone avant de véhicule (1), laquelle comporte au moins un capteur (FS1, FS2, FS3, FS4, UF1, UF2) destiné à collecter une grandeur physique, une unité d'interprétation et de commande (20) qui interprète la grandeur physique collectée en vue de la reconnaissance d'une collision, et au moins une unité d'interface (30) qui alimente en énergie l'au moins un capteur (FS1, FS2, FS3, FS4, UF1, UF2) de l'au moins une unité de détection (3, 5) et transmet des signaux électriques, lesquels représentent la grandeur physique collectée, de l'au moins un capteur (FS1, FS2, FS3, FS4, UF1, UF2) à l'unité d'interprétation et de commande (20), une première unité de détection (3) collectant des grandeurs physiques en vue de reconnaître une collision avec un piéton, et des moyens de protection des personnes qui peuvent être activés par des signaux de déclenchement, lesquels sont générés et délivrés par l'unité d'interprétation et de commande (20), **caractérisé en ce que** l'ensemble de détection est configuré selon l'une des revendications 1 à 13.
